# EUROPEAN PATENT APPLICATION

(11) **EP 4 411 176 A1**
(43) Date of publication of application: **07.08.2024**
(21) Application number: 23154834.8
(22) Date of filing: 03.02.2023
(51) Int. Cl.: F16H 25/24, F16H 57/04, B66F 7/14, F16H 25/22

(54) **LINEAR ACTUATOR WITH CONTACT TYPE SAFETY NUT AND FAULT DETECTION METHOD THEREOF**

(71) Applicant: Zhejiang Dingli Machinery Co., LTD., Leidian Town Deqing, Zhejiang 313219 (CN)
(72) Inventor: XU, Zhong, Huzhou, Zhejiang Province, 313219 (CN); XU, Shugen, Huzhou, Zhejiang Province, 313219 (CN)
(74) Representative: Longoni, Alessandra

(57) **Abstract**

The present disclosure relates to the technical field of aerial work platforms, in particular to a linear actuator with a contact type safety nut and a fault detection method thereof. The linear actuator includes a central screw, a driving nut mechanism, a safety nut mechanism, and a driving control assembly. The central screw has a screw raceway. The safety nut mechanism includes a safety nut seat sleeved at the periphery of the central screw. Limit hole channels pointing to the central screw are arranged on the safety nut seat. An elastic buffer element is arranged in each of the limit hole channels. A safety ball is arranged between the elastic buffer element and the central screw. The driving control assembly includes a motor for driving the central screw to rotate and a motor controller for controlling the motor to operate.

## Description

### FIELD OF TECHNOLOGY

The present disclosure relates to the technical field of aerial work platforms, in particular to a linear actuator with a contact type safety nut and a fault detection method thereof.

### BACKGROUND

At present, linear actuators are widely used in various fields, including medical equipment, home office, solar power generation, and so on. In general, such linear actuator structurally includes a drive motor, a driving screw, a worm gear, and a driving nut. The drive motor drives a rotating screw to rotate, the rotating screw drives the driving nut to move axially during rotation, and the driving nut may be connected to a drive object, so as to achieve drive. During operation, the linear actuator needs to bear an axial force and a certain lateral force, such that the driving nut is damaged due to abnormal wear and material defects so as to descend suddenly, causing greater danger. To improve the safety performance in use, safety nuts are arranged in driving nuts of many linear actuators. The safety nut is arranged to only lower a push rod to a safety position, rather than to keep continuous operation of the push rod after a screw tooth or ball of the driving nut is damaged. When the driving nut operates normally, the safety nut does not take effect, so the safety nut is usually not connected to the screw at this time. When the driving nut is damaged during ascending, the linear actuator will not continue ascending, but will rotate at an original position. If the motor rotates reversely, the linear actuator may return to the safety position under the driving of the safety nut.

Because the safety nut is connected to the screw to take effect only when the screw fails, the safety nut does not take effect when a screw lifter operates normally, and the safety nut will not be connected to the screw, such that normal operation of the screw lifter is not affected. As disclosed in the patent application with the publication number of CN1 13840794A, a lifting apparatus includes a central screw, a main nut mechanism, and an auxiliary nut mechanism, where the main nut mechanism is connected to the central screw, and the auxiliary nut mechanism is separated from the central screw. When the main nut mechanism fails, the auxiliary nut mechanism is configured to be connected to the central screw, which avoids danger caused by rapid descending of the lifting apparatus; and then, a lifting controller is configured to allow a work platform to descend to a retraction or transport position, so as to allow a worker or an operator to safely leave a carrier. When the main nut mechanism fails, the auxiliary nut mechanism in the patent application can be connected to the central screw to ensure the safety, but when the main nut mechanism operates normally, the auxiliary nut mechanism is always separated from the central screw. Therefore, at the moment when the auxiliary nut mechanism is connected to the central screw, more violent impact will occur, which may cause damage to the central screw and to the auxiliary nut mechanism, and cause the actuator to vibrate more violently, such that the lifted platform will also vibrate to endanger the safety of personnel on the platform. In addition, after the auxiliary nut mechanism acts, the lifting apparatus does not directly remain stationary at the current position to wait for maintenance, and the actuator still needs to operate to complete a current lifting task or at least needs to descend to a safety height. The auxiliary nut mechanism is connected to the central screw via screw threads, specifically it is close to and connected to the central screw along an axial direction of the central screw. Although an original gap is not large, the actuator still has an obvious position error in the axial direction of the central screw after connection, resulting in a larger error of entire lifting control. In addition, a fault detection method in the patent application has low integration level.

### SUMMARY

In view of the above problems existing in the prior art, the present disclosure makes an improvement, namely, to solve the above technical problems, and provides a linear actuator with a contact type safety nut, including a central screw, a driving nut mechanism, a safety nut mechanism, and a driving control assembly, where the central screw has a screw raceway; the safety nut mechanism includes a safety nut seat sleeved at the periphery of the central screw; limit hole channels pointing to the central screw are arranged on the safety nut seat; an elastic buffer element is arranged in each limit hole channel; a safety ball is arranged between the elastic buffer element and the central screw; the safety ball partially extends into the screw raceway to be partially positioned in the corresponding limit hole channel, and the safety ball is capable of rolling along the screw raceway and moving along the corresponding limit hole channel; the driving control assembly includes a motor for driving the central screw to rotate and a motor controller for controlling the motor to operate; the motor controller can directly receive an external operation state signal and resolve the signal into an action command to control operation of the motor. In the present disclosure, the elastic buffer element and the safety ball form an elastic ball mechanism, and the safety nut mechanism always keeps connection with the central screw via the elastic ball mechanism. The driving nut mechanism is, for example, a conventional ball screw nut, which converts rotary actuation of the central screw into a translational motion. In a normal working state that the driving nut mechanism does not fail, compared to the prior art that the safety nut mechanism is kept separated from the central screw at this time, the safety nut mechanism in the present disclosure always keeps elastic connection with the central screw via the specially structured elastic ball mechanism, that is, the contact type safety nut. When the driving nut mechanism fails, the elastic ball mechanism does not affect engaged connection between the safety nut mechanism and the central screw.

As a preference of the present disclosure, thread teeth are provided on an inner wall of the safety nut seat, and the thread teeth extend into the screw raceway and are spaced from the central screw.

As a preference of the present disclosure, the linear actuator further includes a height sensor configured to monitor a height of a platform, a weight sensor configured to monitor a weight of the platform, and a current sensor configured to monitor a current of the motor, where a calibrated database of heights, weights, and currents for comparison is stored in the motor controller, and the motor controller can obtain monitored data of the height sensor, the weight sensor, and the current sensor, and determine whether a real-time current exceeds a calibrated current.

As a preference of the present disclosure, a standard current calculation module is provided in the motor controller, and in a self-balancing state, the calculation module can calculate a corresponding standard current according to the height and weight of the current platform, and determine whether the real-time current is lower than the standard current.

As a preference of the present disclosure, the height sensor, the weight sensor, and the current sensor are connected to the motor controller via electrical wires.

As a preference of the present disclosure, the motor controller has a wireless communication conversion module capable of receiving and resolving the external operation state signal.

As a preference of the present disclosure, the linear actuator further includes a warning light, where the motor controller can control the warning light to flicker when determining that the safety nut mechanism takes effect.

As a preference of the present disclosure, the linear actuator further includes a remote terminal configured to communicate with a cloud server via a network, where the motor controller can send a fault code to the remote terminal, and the remote terminal is configured to transmit the fault code into the cloud server.

As a preference of the present disclosure, during free descending of the linear actuator, the motor rotates reversely and converts kinetic energy into electric energy.

A fault detection method for the linear actuator with a contact type safety nut includes the following steps:
S01: directly receiving, by the motor controller, the external operation state signal, and resolving it into the action command that can control the motor;
S02: controlling operation of the motor according to the action command obtained by resolving;
S03: when the action command is ascending or descending, operating the motor to cause the linear actuator to execute the action of ascending or descending, meanwhile determining in time, by the motor controller, whether the monitored real-time current exceeds the calibrated current, corresponding to the height and weight of the current platform, in the database, and when the real-time current does not exceed the calibrated current, continuing, by the linear actuator, executing the action of ascending or descending;
S04: when the motor controller determines that the real-time current monitored in real time exceeds the calibrated current, corresponding to the height and weight of the current platform, in the database at a time when the action of ascending or descending is executed, and controlling, by the motor controller, the motor to change the output power such that the linear actuator stops ascending or descending and is kept at the current height;
S05: enabling the linear actuator to enter the self-balancing state, calculating, by the motor controller, the standard current for keeping the self-balancing state according to the height and weight of the current platform, meanwhile determining in real time whether the monitored real-time current is lower than the calculated standard current for keeping the self-balancing state, and when the real-time current is not lower than the standard current, determining that the safety nut does not take effect, and controlling, by the motor controller, the motor to continue executing the initial action command of ascending or descending;
S06: when the real-time current is lower than the standard current in the self-balancing state, determining, by the motor controller, that the safety nut mechanism takes effect;
S07: when the initial action command is ascending, causing, by the motor controller, the linear actuator to stop ascending, and keeping, by the motor, the current state of the linear actuator; when the action command is descending, causing, by the motor controller, the motor to stop operation, and releasing a brake of the motor, such that the linear actuator descends freely and drives the motor to rotate reversely, so as to achieve energy recovery of the motor; and
S08: controlling, by the motor controller, the warning light to flicker and sending the fault code to the remote terminal, transmitting, by the remote terminal, the fault code to the cloud server, and informing, by the cloud server, the after-sales service personnel via the wireless signal.

The beneficial effects are as follows:
The design of the contact type safety nut enables the linear actuator to always keep safety, stability, and no loss of accuracy in a conversion process that the safety nut mechanism gets involved to take effect while the driving nut mechanism fails. The motor controller has a micro control unit (MCU), integrates the function of a vehicle control unit (VCU), and can directly receive and resolve the operation state signal of a handle, such that the vehicle control unit (VCU) is directly canceled on hardware, thereby lowering the cost, improving the integration level, reducing complex lines, and decreasing the failure rate. Moreover, the higher efficiency and accuracy of fault detection are achieved.

### BRIEF DESCRIPTION OF THE DRAWINGS

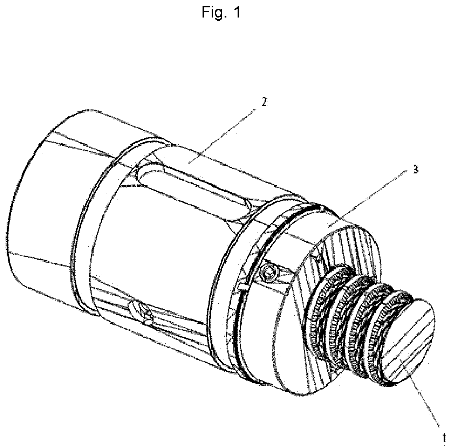

FIG. 1 is a schematic diagram of a three-dimensional structure of a driving nut mechanism and a safety nut mechanism installed on a central screw;

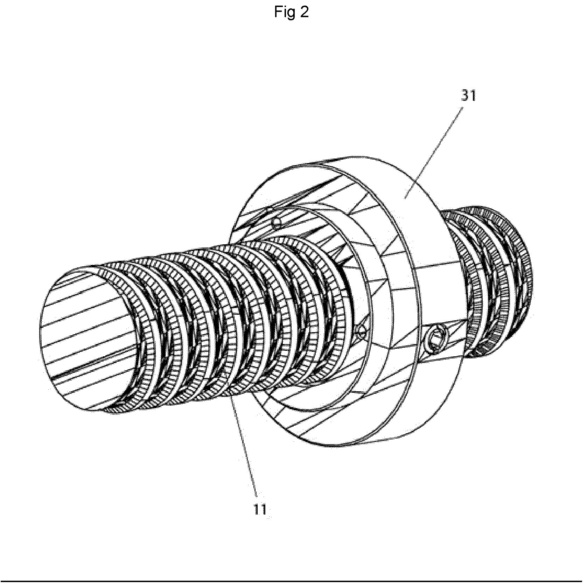

FIG. 2 is a schematic diagram of a safety nut seat and a central screw;

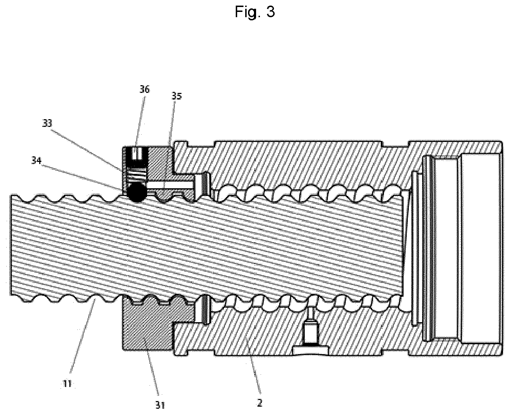

FIG. 3 is a sectional view of FIG. 1;

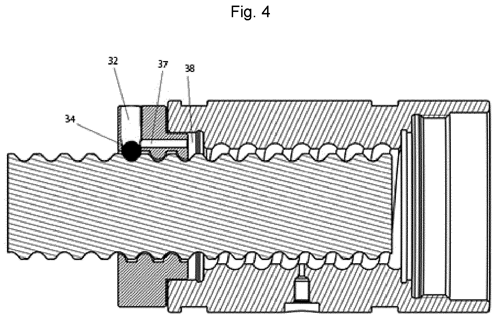

FIG. 4 is a schematic diagram of FIG. 3 in which a plunger and an elastic buffer element are omitted;

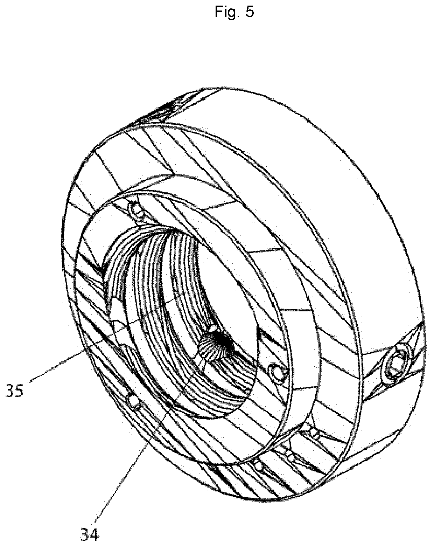

FIG. 5 is a schematic diagram that outlets that limit hole channels are positioned on thread teeth;

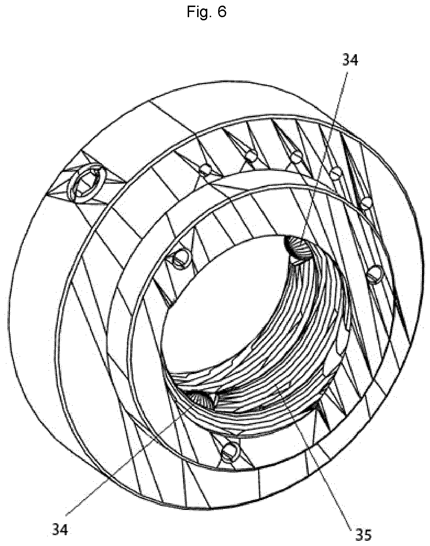

FIG. 6 is a schematic diagram that outlets that all limit hole channels are arranged on thread teeth along a screw extension direction of the thread teeth;

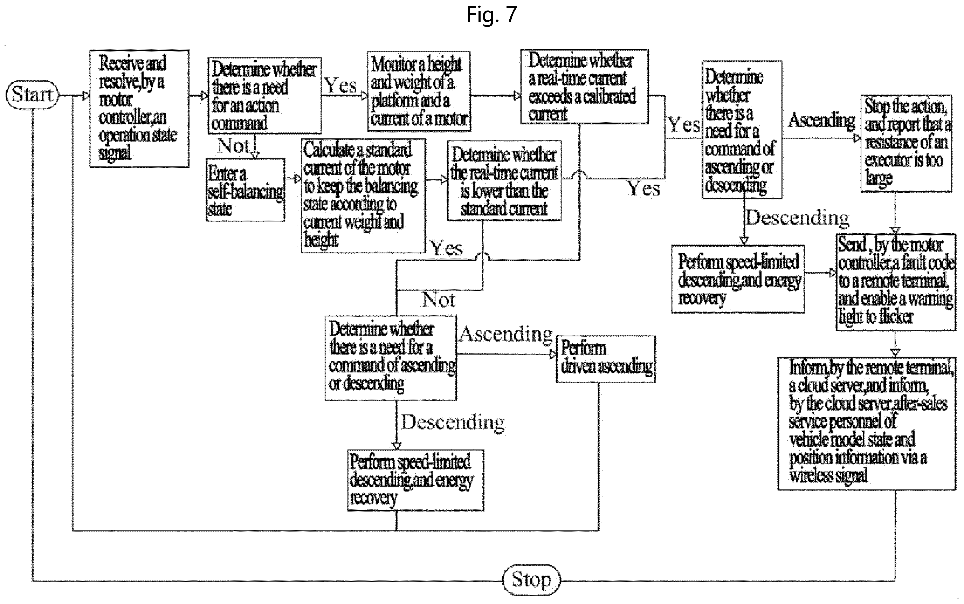

FIG. 7 is a flow chart of a fault detection method;

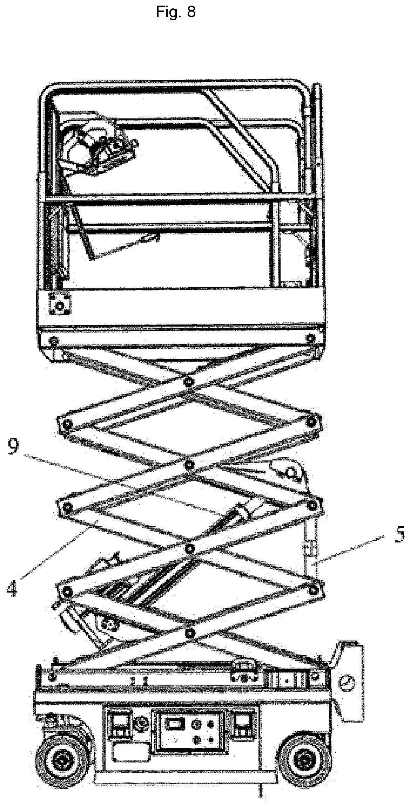

FIG. 8 is a schematic diagram of an overall structure of scissors lifting equipment;

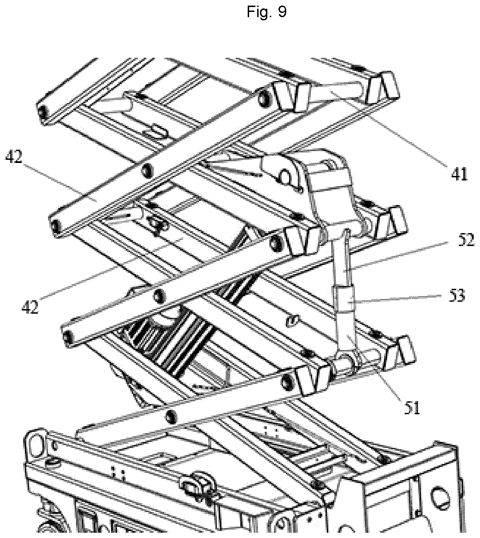

FIG. 9 is a schematic diagram of a hydraulic buffer in operation;

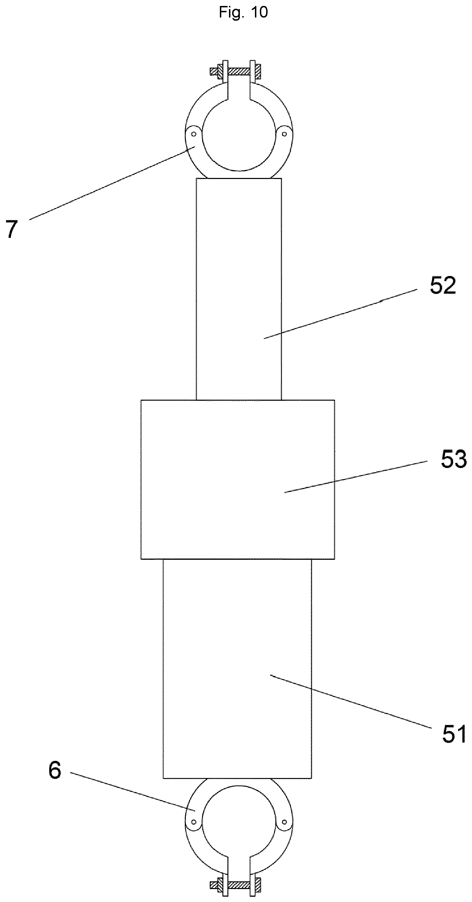

FIG. 10 is a schematic structural diagram of the hydraulic buffer;

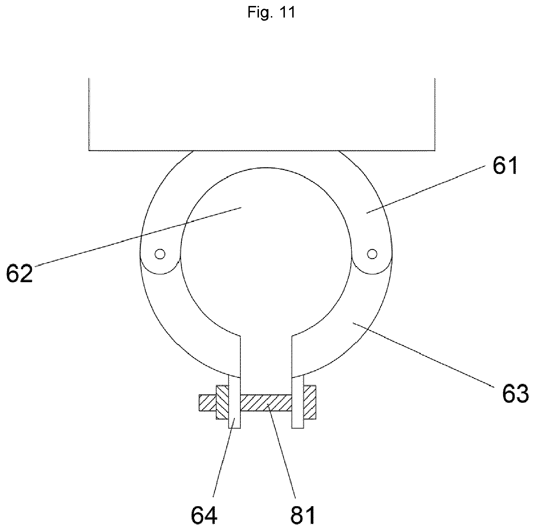

FIG. 11 is a schematic diagram of a lower connection end;

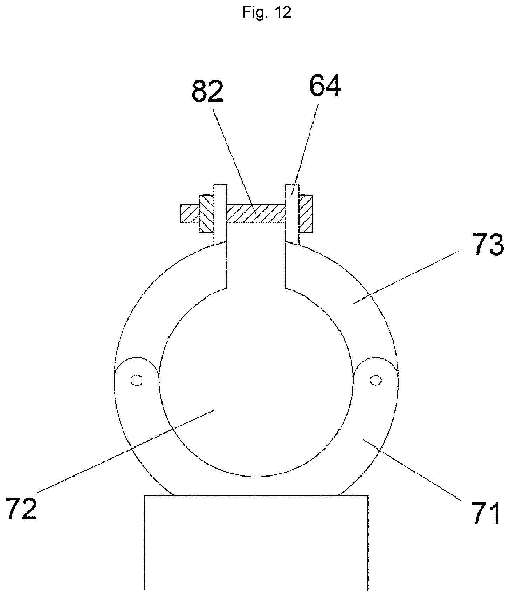

FIG. 12 is a schematic diagram of an upper connection end.

LEGENDA: 1: central screw; 11: screw raceway; 2: driving nut mechanism, 3: safety nut mechanism; 31: safety nut seat; 32: limit hole channel; 33: elastic buffer element; 34: safety ball; 35: thread teeth; 36: plunger; 37: transfer hole channel; 38: oil supplementing cavity; 4: scissors mechanism; 41: transverse support rod; 42: scissors frame; 5: hydraulic buffer; 51: hydraulic cylinder; 52: piston rod; 53: dust cover; 6: lower connection end; 61: lower arc-shaped seat; 62: lower arc groove; 63: lower opening and closing portion; 64: installation piece; 7: upper connection end; 71: upper arc-shaped seat; 72: upper arc groove; 73: upper opening and closing portion; 81: lower fastener; 82. upper fastener; and 9: lifting mechanism.

### DESCRIPTION OF THE EMBODIMENTS

The specific embodiments below only illustrate rather than limiting the present disclosure. Upon reading this specification, those skilled in the art may make modifications to the embodiments without creative contributions as needed, but the modifications are protected by the patent law as long as they are within the scope of the claims of the present disclosure.

### Embodiment 1:

A linear actuator with a contact type safety nut according to the present disclosure includes a central screw 1, a driving nut mechanism 2, and a safety nut mechanism 3, where the central screw 1 has a screw raceway 11, the safety nut mechanism 3 includes a safety nut seat 31 sleeved at the periphery of the central screw 1, there is no contact between the safety nut seat 31 and the central screw 1, a limit hole channel 32 pointing to the central screw 1 is arranged on the safety nut seat 31, an elastic buffer element 33 is arranged in the limit hole channel 32, and a safety ball 34 is arranged between the elastic buffer element 33 and the central screw 1; one end of the elastic buffer element 33 far from the safety ball 34 can be supported, specifically it may be fixedly connected to an inner wall of the limit hole channel 32, or one end of the limit hole channel 32 far from the central screw 1 is not connected such that there exists a bottom surface, and the elastic buffer element 33 directly abuts on this bottom surface; the safety ball 34 partially extends into the screw raceway 11 to be partially positioned in the corresponding limit hole channel 32, the safety ball 34 is capable of rolling along the screw raceway 11 and moving along the corresponding limit hole channel 32, the safety ball 34 is fully attached to the screw raceway 11, and the safety ball 34 is capable of stably rolling in the screw raceway 11. When the linear actuator is in normal operation, the driving nut mechanism 2 plays a major role in driving, the safety nut mechanism 3 does not take effect but still needs to move together with a driving nut. Only the safety ball 34 in the safety nut mechanism 3 extends into the screw raceway 11 of the central screw 1 and can roll along the screw raceway 11, and the rest of parts in the safety nut mechanism 3 do not contact with the central screw 1, but the safety nut mechanism 3 is connected to the central screw 1 via the safety ball 34. The safety ball 34 is positioned between the elastic buffer element 33 and the central screw 1. When subjected to an external force, the safety ball 34 can overcome an elastic force of the elastic buffer element 33 to move in the limit hole channel 32. Therefore, the safety ball 34 is not tightly pressed in the screw raceway 11, and only rolls along the screw raceway 11. As a result, the existence of the safety ball 34 will not affect normal operation of the driving nut mechanism 2. When the driving nut mechanism 2 fails, it is usually caused by the loss of the ball in the driving nut mechanism 2. At this time, along an axial direction of the central screw 1, the safety ball 34 in the safety nut mechanism 3 is tightly pressed on a side wall of the screw raceway 11, and the safety ball 34 is fully attached to the screw raceway 11, so the safety ball 34 does not move in the axial direction, and there is no instantaneous violent impact between the safety ball 34 and the central screw 1 at the moment of taking effect, thereby ensuring the stability of the entire linear actuator, and avoiding damage to the safety ball 34 and the central screw 1. In addition, the safety ball 34 is partially positioned in the limit hole channel 32, so the axial movement of the safety nut seat 31 can be restricted by clamping the limit hole channel 32, the safety nut mechanism 3 will not cause the linear actuator to produce a position error in the axial direction when it works, and the safety ball 34 replaces the lost ball in the driving nut mechanism 2 at this time to temporarily playing a driving role. In this way, the linear actuator can also complete a current lifting task or descend to a safety height. In short, it can also ensure the accuracy of operation, and the accuracy does not need to be rechecked when the driving nut mechanism 2 is replaced subsequently. In a side direction perpendicular to the axial direction of the central screw 1, the safety nut seat 31 is extruded towards the central screw 1, the safety ball 34 will overcome the elastic force of the elastic buffer element 33 to move towards the interior of the limit hole channel 32, and the elastic buffer element 33 plays a buffering role to avoid violent vibration of the safety nut mechanism 3 and the linear actuator, and to ensure the safety of the lifting equipment. However, in this direction, the safety ball 34 cannot be tightly pressed in the screw raceway 11, and the safety nut seat 31 is directly pressed on the central screw 1 to achieve locking of the central screw 1 by the safety nut mechanism 3, thereby ensuring the safety. In short, the design of a contact type safety nut enables the linear actuator to always keep safety, stability, and no loss of accuracy in a conversion process that the safety nut mechanism 3 gets involved to take effect while the driving nut mechanism 2 fails.

In this embodiment, the limit hole channel 32 points to the central screw 1, and a specific extension direction of the limit hole channel 32 is perpendicular to the axial direction of the central screw 1. There is only one safety ball 34 in each limit hole channel 32 of the safety nut mechanism 3, so to ensure the overall effect of the safety nut; in this embodiment, preferably a plurality of the limit hole channels 32 are arranged on the safety nut seat 31 along a circumferential direction of the safety nut seat, and the elastic buffer element 33 and the safety ball 34 are arranged in each limit hole channel 32. In this embodiment, the safety nut mechanism 3 resists a lateral force mainly by relying on direct extrusion of the safety nut seat 31 and the central screw 1, and plays a locking role. However, an inner wall of the safety nut seat 31 and the central screw 1 are smoothly attached to each other. When the lateral force is smaller, the locking effect is general, and the axial locking effect is very general. Therefore, in this embodiment, preferably thread teeth 35 are provided on the inner wall of the safety nut seat 31, and the thread teeth 35 extend into the screw raceway 11 and are spaced from the central screw 1. When the driving nut mechanism 2 operates normally, the thread teeth 35 do not contact with the central screw 1; when the driving nut mechanism 2 fails, the safety ball 34 still plays the above role, while the safety nut seat 31 no longer directly extrudes the central screw 1, but is extruded in the screw raceway 11 of the central screw 1 via the thread teeth 35, such that the thread teeth 35 can directly compress the central screw 1 in the side direction, have good locking effect, and can also share the load of the safety ball 34 in the axial direction, thereby ensuring the strength and reliability of the safety nut mechanism 3.

When the driving nut mechanism 2 operates normally, the safety ball 34 is not tightly pressed in the screw raceway 11 but rolls in the screw raceway 11, so the normal operation of the driving nut mechanism 2 will not be impacted to a greater extent. However, a frictional force between the safety ball 34 and the screw raceway 11 will still slightly impact the normal operation of the driving nut mechanism 2, especially the operating efficiency, accuracy and energy consumption. Therefore, in this embodiment, preferably the limit hole channels 32 are filled with oil, the limit hole channel 32 has the same cross section diameter as the safety ball 34, an outer ring of the safety ball 34 is fully attached to the inner wall of the limit hole channel 32, the effect of clamping the limit hole channel 32 by the safety ball 34 to restrict the safety nut seat 31 is good, the movement of the safety ball 34 in the limit hole channel 32 is fully restricted by the limit hole channel 32, which is very stable, and the safety ball 34 blocks the limit hole channel 32 to prevent the oil from flowing out of the limit hole channel 32 directly; and the oil is in direct contact with the surface of the safety ball 34, the safety ball 34 with the oil on the surface rolls in the screw raceway 11, and the oil plays a lubricating role to reduce the frictional force between the safety ball 34 and the screw raceway 11, thereby further reducing the impact of the safety nut mechanism 3 on the normal operation of the driving nut mechanism 2. In addition, the oil in the limit hole channel 32 can also buffer the safety ball 34 to a certain extent, thereby further improving the shock absorption effect.

According to a further improvement, in this embodiment, preferably the limit hole channels 32 pass through inner and outer side walls of the safety nut seat 31, the safety ball 34 blocks an outlet of the corresponding limit hole channel 32 close to the central screw 1, a plunger 36 is detachably installed at an inlet of each of the limit hole channels 32 far away from the central screw 1, the plunger 36 blocks the inlet of the corresponding limit hole channel 32, and the elastic buffer element 33 is positioned between the plunger 36 and the safety ball 34. The design of the limit hole channel 32 penetrated and the plunger 36 can facilitate the installation of the elastic buffer element 33 and the safety ball 34, as well as the filling of the oil. During installation, firstly the safety nut seat 31 is installed, then the safety ball 34 and the elastic buffer element 33 are put into the limit hole channel 32 in sequence, next the oil is filled, and finally the plunger 36 is installed in the inlet of the limit hole channel 32 for blockage. The installation is very convenient, and the elastic buffer element 33, the safety ball 34, and the safety nut seat 31 do not need to be manufactured together during production and manufacturing, which reduces the manufacturing and maintenance costs. The oil will continue to lose during use. When the oil needs to be added, the plunger 36 is removed, then the oil is supplemented and filled, and the plunger 36 is installed for continuous use. Preferably the plunger 36 is in threaded connection with the limit hole channel 32.

The thread teeth 35 effectively improve the locking capability of the safety nut mechanism 3, but in actual operation, when the safety nut mechanism 3 takes effect, the linear actuator is still required to operate to complete the current lifting task or to descend to the safety height, so under the action of a driving force, the thread teeth 35 on the safety nut mechanism 3 are required to slide along the screw raceway 11 to achieve the movement of the safety nut mechanism 3. In this embodiment, preferably there is a gap between the safety nut seat 31 and the driving nut mechanism 2, and an oil supplementing cavity 38 is formed. The oil supplementing cavity 38 surrounds the central screw 1. Transfer hole channels 37 for communication between the limit hole channels 32 and the oil supplementing cavity 38 are arranged in the safety nut seat 31. During oil filling, the limit hole channels 32, the transfer hole channels 37, and the oil supplementing cavity 38 are filled with the oil. The oil in the oil supplementing cavity 38 flows directly into the screw raceway 11 of the central screw 1 to reduce the frictional force between the thread teeth 35 and the screw raceway 11, such that the safety nut mechanism 3 can more easily move along the central screw 1 under the driving force when it works.

In this embodiment, preferably the limit hole channels 32 are arranged in a circular array along the circumferential direction of the safety nut seat 31, which refers to a planar arrangement of the limit hole channels 32 in a viewing angle along the axial direction of the central screw 1. In fact, these limit hole channels 32 may be spaced along the axial direction of the central screw 1, and are not arranged on one cross section. According to a further improvement, in this embodiment, preferably the outlets of all the limit hole channels 32 are arranged on the thread teeth 35 along a screw extension direction of the thread teeth 35, such that all the safety balls 34 are arranged along the screw extension direction of the thread teeth 35, and the safety balls 34 and the thread teeth 35 are combined with each other, and together play respective roles at the same position of the screw raceway 11, and simultaneously play axial and lateral locking roles at the same position, thereby improving the locking effect. In this embodiment, the elastic buffer element 33 is a spring with the diameter smaller than the diameter of the safety ball 34. The elastic buffer element and the safety ball do not need to be connected to each other, and can interact by directly abutting on each other, which is convenient for installation, and the force transmission effect is good.

An aerial work platform according to the present disclosure includes the linear actuator with the contact type safety nut. In the linear actuator, the safety nut mechanism 3 is safe and stable without loss of accuracy when it works, and can ensure that the aerial work platform can still be safe and stable with good accuracy when the linear actuator fails. The aerial work platform may be a scissors aerial work platform, an aerial work platform with a cargo loading table, or other common aerial work platform.

### Embodiment 2:

The linear actuator in Embodiment 1 is mainly used in a vehicle of the aerial work platform. When the linear actuator fails and causes the safety nut mechanism to take effect, to ensure the safety, it is needed to stop working in time and prompt the operator for maintenance. Therefore, this embodiment is improved on the basis of the linear actuator in Embodiment 1, that is to say, the linear actuator in this embodiment is the linear actuator in Embodiment 1, and then parts are added on the basis to achieve the fault detection function. Specifically, the linear actuator in this embodiment further includes a driving control assembly. The driving control assembly includes a motor for driving the central screw to rotate and a motor controller for controlling the motor to operate, and the motor controller can directly receive an external operation state signal and resolve it into an action command to control operation of the motor. At present, a common way in the prior art is that the operation state signal of a handle is transmitted to a vehicle control unit (VCU), and the vehicle control unit (VCU) resolves the operation state signal and then transmits the resolved signal to a micro control unit (MCU) in the motor controller. In this way, the vehicle control unit (VCU) is connected to the handle and to the motor controller via electrical wires, respectively, so wiring is complex. The handle is a button apparatus for the operator to give commands of ascending, descending, height keeping, etc., and has few operation state signals, so the corresponding vehicle control unit (VCU) has simple functions. On hardware, it is easy to integrate these functions in the micro control unit (MCU) of the motor controller, so the motor controller in this embodiment has the micro control unit (MCU), integrates the function of the vehicle control unit (VCU), and can directly receive and resolve the operation state signal of the handle, such that the vehicle control unit (VCU) is directly canceled on hardware, thereby lowering the cost, improving the integration level, reducing complex lines, and decreasing the failure rate. Meanwhile, the operation state signal sent by the handle is the external operation state signal for the motor controller. Because the operation state signal transmitted by the handle to the motor controller is simple and the handle is directly operated manually by the operator, the handle and the motor controller may be connected to each other via a conventional and reliable electrical wire to transmit the signal, or may communicate with each other via a wireless signal to transmit the signal.

When the linear actuator is actually used in the vehicle of the aerial work platform, the vehicle has a platform. During fault detection of the motor controller in this embodiment, a fault is mainly determined by a height of the platform, a weight of the platform, and a current of the motor, so the linear actuator in this embodiment further includes a height sensor configured to monitor the height of the platform, a weight sensor configured to monitor the weight of the platform, and a current sensor configured to monitor the current of the motor, where the monitoring is real-time monitoring during ascending or descending. A calibrated database of heights, weights, and currents for comparison is stored in the motor controller. The motor controller can obtain monitored data of the height sensor, the weight sensor, and the current sensor, and determine whether a real-time current exceeds a calibrated current. Under normal operation, real-time height and weight correspond to one calibrated current in the calibrated database. When the real-time current monitored exceeds the calibrated current, it proves that the linear actuator is subject to a greater additional resistance. It is very likely that the driving nut mechanism fails and causes the safety nut mechanism to take effect, the safety nut mechanism acts on the central screw to increase the resistance, but it cannot be completely determined that it is caused by effect taking of the safety nut mechanism.

Once the real-time current of the linear actuator in this embodiment is higher than the calibrated current, the motor controller will control the motor to stop rotation, such that the driving nut mechanism will not ascend or descend, but is kept at the current height, thereby avoiding danger. When the motor stops rotation, it means that a main shaft stops rotation, such that the central screw stops rotation. Actually the motor still has power output to keep the current state. At this time, the linear actuator enters a self-balancing state, and it needs to conduct another fault detection to determine whether the safety nut mechanism takes effect. Therefore, in this embodiment, a standard current calculation module is provided in the motor controller. In the self-balancing state, the calculation module can calculate a corresponding standard current according to the height and weight of the current platform, and determine whether the real-time current is lower than the standard current. The standard current refers to a current that the motor should reach to keep the self-balancing state when the safety nut mechanism does not take effect. When the real-time current is not lower than the standard current, it proves that there is no additional resistance, the safety nut mechanism does not take effect, and the driving nut mechanism does not fail. The first fault detection conducted previously during movement may cause a detection deviation due to other factors, such that the motor controller controls the motor to rotate to continue executing the initial action command, and the linear actuator returns to work normally. When the real-time current is lower than the standard current, it proves that there is the additional resistance, it is determined that the safety nut mechanism has taken effect, and the driving nut mechanism fails.

In this embodiment, the height sensor, the weight sensor, and the current sensor need to monitor the equipment in real time. There are high requirements for the efficiency and accuracy of data monitoring and the efficiency of numerical value determination, and the delay should be minimized. Therefore, in this embodiment, preferably the height sensor, the weight sensor, and the current sensor are connected to the motor controller via the electrical wires, which improves the data transmission efficiency and the numerical value determination efficiency, thereby improving the accuracy of whole fault monitoring. The operation state signals transmitted from the handle to the motor controller are simple and few, and the handle is manually operated by the operator. Therefore, preferably the motor controller has a wireless communication conversion module that can receive and resolve the external operation state signals, which reduces the arrangement of the electrical wires, and facilitates the manual operation by the operator. Moreover, the reliability and speed of wireless communication are sufficient to meet the transmission requirement of the simple operation state signals in the handle.

When the safety nut mechanism is proved to take effect according to the above twice fault detection, it is determined that the driving nut mechanism fails, and it is needed to end the normal operation and perform timely maintenance. In this embodiment, preferably the linear actuator further includes a warning light. The motor controller can control the warning light to flicker when determining that the safety nut mechanism takes effect, so as to inform the field operator that the fault occurs and the work needs to be ended. Usually, after finding that the linear actuator fails, a user needs to inform after-sales service personnel of a manufacturer to come for maintenance, thereby causing troubles to the user. To further improve after-sales services, this embodiment incorporates the after-sales services into a fault detection strategy. Preferably the linear actuator further includes a remote terminal configured to communicate with a cloud server via a network. The motor controller can send a fault code to the remote terminal. The remote terminal is configured to transmit the fault code into the cloud server. The cloud server is operated by the manufacturer. After receiving the fault code, detailed information can be directly sent to the after-sales service personnel in a nearby region. After being assigned, the after-sales service personnel can rush to the user in time for maintenance.

When the motor controller determines that the safety nut mechanism takes effect and controls the linear actuator to stop executing a command of ascending or descending, temporary protective measures are required. Specifically, when the initial action command is ascending, the motor controller controls the motor to stop rotation, but the motor still has output power to keep the current state, thereby ensuring the safety of cargoes or personnel on the platform; and when the initial action command is descending, the motor controller enables the motor to stop operation, and a brake of the motor is released, such that the motor is in a state of no output power, and the main shaft of the motor will rotate under an external force. In this embodiment, when the motor rotates reversely, kinetic energy can be converted into electric energy, so the motor can achieve energy recovery under the condition of free descending and retraction of the linear actuator. In addition, the reverse rotation of the motor will provide a resistance to the descending and retraction of the linear actuator, thereby avoiding danger caused by too fast descending of the platform.

The linear actuator in this embodiment has the function of fault detection, such that a set of fault detection method adapted to the linear actuator is provided in actual use. Therefore, a fault detection method for the linear actuator with the contact type safety nut according to the present disclosure includes the following steps:
S01: directly receiving, by the motor controller, the external operation state signal, and resolving it into the action command that can control the motor;
S02: controlling operation of the motor according to the action command obtained by resolving;
S03: when the action command is ascending or descending, operating the motor to cause the linear actuator to execute the action of ascending or descending, meanwhile determining in time, by the motor controller, whether the monitored real-time current exceeds the calibrated current, corresponding to the height and weight of the current platform, in the database, and when the real-time current does not exceed the calibrated current, continuing, by the linear actuator, executing the action of ascending or descending;
S04: when the motor controller determines that the real-time current monitored in real time exceeds the calibrated current, corresponding to the height and weight of the current platform, in the database at a time when the action of ascending or descending is executed, and controlling, by the motor controller, the motor to change the output power such that the linear actuator stops ascending or descending and is kept at the current height;
S05: enabling the linear actuator to enter the self-balancing state, calculating, by the motor controller, the standard current for keeping the self-balancing state according to the height and weight of the current platform, meanwhile determining in real time whether the monitored real-time current is lower than the calculated standard current for keeping the self-balancing state, and when the real-time current is not lower than the standard current, determining that the safety nut does not take effect, and controlling, by the motor controller, the motor to continue executing the initial action command of ascending or descending;
S06: when the real-time current is lower than the standard current in the self-balancing state, determining, by the motor controller, that the safety nut mechanism takes effect;
S07: when the initial action command is ascending, causing, by the motor controller, the linear actuator to stop ascending, and keeping, by the motor, the current state of the linear actuator; when the action command is descending, causing, by the motor controller, the motor to stop operation, and releasing a brake of the motor, such that the linear actuator descends freely and drives the motor to rotate reversely, so as to achieve energy recovery of the motor; and
S08: controlling, by the motor controller, the warning light to flicker and sending the fault code to the remote terminal, transmitting, by the remote terminal, the fault code to the cloud server, and informing, by the cloud server, the after-sales service personnel via the wireless signal.

### Embodiment 3:

Scissors lifting equipment with a hydraulic buffer 5 for maintenance according to the present disclosure includes a hydraulic buffer 5 and a scissors mechanism 4, where the hydraulic buffer 5 includes a hydraulic cylinder 51 and a piston rod 52, the hydraulic cylinder 51 has a lower connection end 6, the piston rod 52 has an upper connection end 7, and the hydraulic buffer 5 can support the scissors mechanism 4 after being connected to the scissors mechanism 4 via the upper connection end 7 and the lower connection end 6. The hydraulic buffer 5 is used for support. When the scissors mechanism 4 applies a pressure to the hydraulic buffer 5, the piston rod 52 will be gradually pressed into the hydraulic cylinder 51. During the process, with characteristics of strong buffer capacity and load capacity of the hydraulic buffer 5, the hydraulic buffer 5, when supporting the scissors mechanism 4, not only is safe and stable, but also resists impact with buffer performance, thereby avoiding damage to the hydraulic buffer and the scissors mechanism 4. In addition, a maximum load that can be met is larger. In actual maintenance, only the hydraulic buffer 5 may even be used for support, without starting a lifting mechanism 9 to provide an additional support force, which can effectively save energy in the generally longer-time maintenance. In this embodiment, the hydraulic buffer 5 has the lower connection end 6 and the upper connection end 7 specially connected to the scissors mechanism 4, and the firmness of connection is good, which further ensures the safety.

The scissors mechanism 4 includes two groups of front and rear scissors frames 42 and transverse support rods 41 erected between the two groups of scissors frames 42, and the transverse support rods 41 are positioned on left and right sides of the scissors mechanism 4 and arranged along an up-down direction. When the scissors frames 42 extend, the transverse support rods 41 on the same side are far away from each other in the up-down direction, and when the scissors frames 42 retract, the transverse support rods 41 on the same side are close to each other in the up-down direction. The hydraulic buffer 5 is arranged between the upper and lower adjacent transverse support rods 41 in the transverse support rods 41 on one side, and is connected to the upper transverse support rod 41 and the lower transverse support rod 41 via the upper connection end 7 and the lower connection end 6. The whole scissors mechanism 4 is supported by supporting the two transverse support rods 41. The hydraulic buffer 5 may be damaged. The load capacity of the hydraulic buffer 5 required for different actual situations is also different. The two situations require replacement of the hydraulic buffer 5, so in this embodiment, a form of connection between the lower connection end 6 and the corresponding transverse support rod 41 is detachable fixation.

According to the specific form of connection between the hydraulic buffer 5 and the transverse support rods 41, in this embodiment, preferably the lower connection end 6 includes a lower arc-shaped seat 61, and the lower arc-shaped seat 61 has a lower arc groove 62 that can be fully attached to an outer wall of the corresponding transverse support rod 41 to achieve clamping; lower opening and closing portions 63 are rotatably connected to two ends of the lower arc-shaped seat 61, the lower opening and closing portions 63 are arc-shaped and can be fully attached to the outer wall of the corresponding transverse support rod 41: lower fasteners 81 are connected to ends of the two lower opening and closing portions 63, and the lower fasteners 81 can pull the ends of the two lower opening and closing portions 63 towards each other to achieve locking. The lower arc-shaped seat 61 is an integrally formed part with higher structural strength and plays a major role in clamping and supporting. Each transverse support rod 41 is a circular rod. A shape of the lower arc groove 62 matches with a shape of the outer wall of the corresponding transverse support rod 41. The lower arc-shaped seat 61 half encloses the corresponding transverse support rod 41 via the lower arc groove 62, such that the clamping is stable and reliable. The lower opening and closing portions 63 enable the lower connection end 6 to completely hoop the corresponding transverse support rod 41, thereby further improving the firmness of connection. The lower fasteners 81 have a force to pull the ends of the two lower opening and closing portions 63 towards each other during the locking, such that the two lower opening and closing portions 63 tightly hoop the corresponding transverse support rod 41. During installation, the two lower opening and closing portions 63 are in an opened state. After the lower arc-shaped seat 61 is clamped with the corresponding transverse support rod 41, the two lower opening and closing portions 63 hoop the corresponding transverse support rod 41 and are locked with the lower fasteners 81.

When the two ends are in contact with each other after the two lower opening and closing portions 63 hoop the corresponding transverse support rod 41, there already is actually interference between the two. No matter how the lower fasteners 81 increase a locking force, it is difficult to act on the two lower opening and closing portions 63. Therefore, in this embodiment, preferably after, the two lower opening and closing portions 63 are fully attached to the outer wall of the corresponding transverse support rod 41, and there is a distance between the ends of the two lower opening and closing portions 63. In this way, when the lower fasteners 81 increase the locking force, a tight hooping force between the lower opening and closing portions 63 and the corresponding transverse support rod 41 can be increased, thereby further improving the locking effect. After locking, it is difficult for the lower connection end 6 to move relative to the corresponding transverse support rod 41, so it may be considered that a fixed state is achieved. Installation pieces 64 for installation of the lower fasteners 81 are provided at the ends of the lower opening and closing portions 63. The installation pieces 64 are in a vertical shape, while the locking force generated by the lower fasteners 81 is perpendicular to the installation pieces 64. The lower fasteners 81 pull the two installation pieces 64 to improve the transmission effect of the lower fasteners 81 on the locking force, thereby further improving the locking effect. Preferably each lower fastener 81 includes a bolt and a nut. A through hole for the bolt to pass through is formed in each installation piece 64. The bolt is simultaneously arranged in the through holes of the two installation pieces 64 in a penetration manner, and then the nut is screwed to generate the locking force.

In this embodiment, the upper connection end 7 includes an upper arc-shaped seat 71, and the upper arc-shaped seat 71 has an upper arc groove 72 that can be fully attached to the outer wall of the corresponding transverse support rod 41 to achieve clamping; upper opening and closing portions 73 are rotatably connected to two ends of the upper arc-shaped seat 71, the upper opening and closing portions 73 are arc-shaped and can be fully attached to the outer wall of the corresponding transverse support rod 41, upper fasteners 82 are connected to ends of the two upper opening and closing portions 73, and the upper fasteners 82 can pull the ends of the two upper opening and closing portions 73 towards each other to achieve locking. The upper arc-shaped seat 71, the upper opening and closing portions 73, and the upper fasteners 82 are correspondingly consistent with the lower arc-shaped seat 61, the lower opening and closing portions 63, and the lower fasteners 81 in function and installation principle, respectively. Of course, it may be further preferred that there is also a distance between the ends of the two upper opening and closing portions 73 after the corresponding transverse support rod 41 is hooped, and installation pieces 64 for installation of the upper fasteners 82 are provided at the ends of the two upper opening and closing portions 73, so as to better play the locking role of the upper fasteners 82. The upper fasteners 82 are also consistent with the lower fasteners 81 in composition.

The hydraulic buffer 5 can only be put up for use during maintenance. When the scissors lifting equipment works normally, the hydraulic buffer 5 does not take effect and can be directly removed via the lower connection end 6 and the upper connection end 7. However, there is usually no spare place on the equipment and it is too complicated to remove it after each use. Therefore, in this embodiment, preferably a storage box with an upward opening is arranged on a side wall of one scissors frame 42 towards the other scissors frame 42. When the lower fasteners 81 are loosened, the lower connection end 6 can move towards the scissors frame 42 with the storage box along the corresponding transverse support rod 41. The lower fasteners 81 are rotatable relative to the corresponding transverse support rod 41, such that the hydraulic buffer 5 falls into the storage box. During use, the hydraulic buffer 5 is usually positioned between the transverse support rods 41 for better support, while the storage box is arranged on the side wall of the corresponding scissors frame 42, which is a connection relationship of direct fixation. The closer they are, the stronger the firmness is, and the interference with the lifting mechanism 9 can be avoided. Therefore, during storage of the hydraulic buffer 5, the connection between the upper connection end 7 and the corresponding transverse support rod 41 is removed first, and then the nuts in the lower fasteners 81 are unscrewed, such that the lower opening and closing portions 63 no longer tightly hoop the corresponding transverse support rod 41; the lower connection end 6 is movable or rotatable relative to the corresponding transverse support rod 41, and first moves towards the scissors frame 42 provided with the storage box until the hydraulic buffer 5 is aligned with the storage box, and then the lower connection end 6 rotates relative to the corresponding transverse support rod 41, such that the hydraulic buffer 5 falls into the storage box to achieve storage. Further, preferably a detachable cover plate is arranged at the opening of the storage box. When the hydraulic buffer 5 is stored in the storage box, the cover plate is installed to prevent the hydraulic buffer 5 from leaving the storage box to affect normal operation of the equipment.

Since the piston rod 52 will enter and exit from the hydraulic cylinder 51 when the hydraulic buffer 5 works, to prevent impurities from entering the hydraulic cylinder 51 via a gap to affect normal operation of the hydraulic cylinder 51, in this embodiment, preferably the hydraulic buffer 5 further includes a dust cover 53 sleeved at one end of the hydraulic cylinder 51; the dust cover 53 is fixed to the piston rod 52, the dust cover 53 is movable relative to the hydraulic cylinder 51 along with the piston rod 52, a circumferential side of the dust cover 53 surrounds one end of the hydraulic cylinder 51, one axial side thereof is sealed and fixed to the piston rod 52, and the other axial side thereof is open for the hydraulic cylinder 51 to extend into. In this way, the dust cover 53 can prevent the impurities from entering the hydraulic cylinder 51. The hydraulic buffer cylinder has one maximum load and will be damaged to be out of operation when this load is exceeded. Therefore, in this embodiment, preferably a warning scale is arranged on an outer wall of the hydraulic cylinder 51. When the dust cover 53 moves, a visible distance change is generated between the lower edge of the dust cover and the warning scale. When the lower edge of the dust cover 53 reaches the warning scale, the hydraulic buffer 5 reaches the maximum load. During use of the hydraulic buffer 5, firstly it is needed to lift up the scissors mechanism 4 with the lifting mechanism 9, such that a distance between the upper and lower adjacent transverse support rods 41 is greater than a total length of the hydraulic buffer 5 in an initial state; then the hydraulic buffer 5 is propped up from the storage box, and the upper arc groove 72 in the upper arc-shaped seat 71 of the upper connection end 7 is aligned with the upper transverse support rod 41; then a descending function module of the lifting mechanism 9 is turned on to drive the scissors mechanism 4 to retract and descend, the corresponding transverse support rod 41 enters the upper arc groove 72, and descending is continued such that the hydraulic buffer 5 supports the transverse support rods 41. In the process of continuing descending, it is needed to make the lifting mechanism 9 stop descending in time before the lower edge of the dust cover 53 exceeds the warning scale, so as to avoid damage to the hydraulic buffer 5. In this way, only the scissors mechanism 4 is pressed on the hydraulic buffer 5, which is usually the load that the hydraulic buffer 5 can bear.

However, in actual operation, an operator will forget to turn off the lifting mechanism 9 without paying attention, the lifting mechanism 9 continues descending, the hydraulic buffer 5 bears a pressure of the scissors mechanism 4 and a push force of the lifting mechanism 9, and when the lower edge of the dust cover 53 exceeds the warning scale, the hydraulic buffer 5 is damaged. Therefore, in this embodiment, preferably the scissors lifting equipment further includes the lifting mechanism 9, a controller, and a switch, where the lifting mechanism 9 is configured to support the scissors mechanism 4 and has an ascending function module and a descending function module that can push the scissors mechanism 4 to extend or retract; the switch is arranged on the hydraulic buffer 5 and can be triggered when the lower edge of the dust cover 53 reaches the warning scale; the controller can receive a signal of the switch and control the lifting mechanism 9 to stop an action of descending, so as to avoid the damage to the hydraulic buffer 5. The lifting mechanism 9 is the linear actuator with the contact type safety nut described in Embodiment 1.

Based on the above scissors lifting equipment with the hydraulic buffer 5 for maintenance, the present disclosure provides a control method for the scissors lifting equipment with the hydraulic buffer 5 for maintenance, specifically a control method during maintenance, including the following steps:
S01: turning on the ascending function module of the lifting mechanism 9 to drive the scissors mechanism 4 to extend until the distance between the two adjacent transverse support rods 41 in the up-down direction exceeds the total length of the hydraulic buffer 5 in the initial state;
S02: taking out the hydraulic buffer 5 from a storage position and propping up the hydraulic buffer, such that the upper connection end 7 of the hydraulic buffer 5 is aligned with the corresponding transverse support rod 41 of the scissors mechanism 4;
S03: turning on the descending function module of the lifting mechanism 9 to drive the scissors mechanism 4 to retract, such that the corresponding transverse support rod 41, positioned above the hydraulic buffer 5 and closest to the upper connection end 7, moves towards the upper connection end 7 until being connected to the upper connection end 7;
S04: enabling the lifting mechanism 9 to continue driving the scissors mechanism 4 to retract, such that the transverse support rods 41 extrude the hydraulic buffer 5 to make the hydraulic buffer 5 gradually retract, and the lower edge of the dust cover 53 gradually approaches the warning scale; and
S05: before the lower edge of the dust cover 53 exceeds the warning scale, turning off the descending function module of the lifting mechanism 9 to stop the retraction of the scissors mechanism 4, and enabling the hydraulic buffer 5 to support the scissors mechanism 4.

According to a further improvement of the above step S05, in step S05, when the lower edge of the dust cover 53 reaches the warning scale, the dust cover 53 is configured to trigger the switch, and the controller is configured to control the lifting mechanism 9 to turn off the descending function module after obtaining the signal of the switch.

According to a further improvement, after step S05, the method further includes a step S06: after the descending function module of the lifting mechanism 9 is turned off, enabling the controller to control the lifting mechanism 9 to turn on the ascending function module, where a support force output by the ascending function module can keep a static state of the scissors mechanism 4 together with the hydraulic buffer 5, such that the load of the hydraulic buffer 5 is reduced, and even in an extreme case of sudden failure of the hydraulic buffer 5, the lifting mechanism 9 can also play a supporting role, thereby further ensuring the safety.

The lifting mechanism 9 is used in the above control method, so it is aimed at maintaining parts other than the lifting mechanism 9. When the lifting mechanism 9 needs to be maintained, another control method is required. A control method for the scissors lifting equipment with the hydraulic buffer 5 for maintenance according to the present disclosure includes the following steps:
S01: hanging and pulling up the scissors mechanism 4 to extend the scissors mechanism 4 until the distance between the two adjacent transverse support rods 41 in the up-down direction exceeds the total length of the hydraulic buffer 5 in the initial state;
S02: taking out the hydraulic buffer 5 from a storage position and propping up the hydraulic buffer, such that the upper connection end 7 of the hydraulic buffer 5 is aligned with the corresponding transverse support rod 41 of the scissors mechanism 4;
S03: keeping the hanging and pulling of the scissors mechanism 4, gradually lowering the scissors mechanism 4 with a hanging and pulling force, and enabling the scissors mechanism 4 to retract, such that the corresponding transverse support rod 41, positioned above the hydraulic buffer 5 and closest to the upper connection end 7, moves towards the upper connection end 7 until being connected to the upper connection end 7;
S04: with continuous retraction of the scissors mechanism 4, enabling the hydraulic buffer 5 to gradually support the transverse support rods; and
S05: removing the hanging and pulling force such that the scissors mechanism 4 is fully supported by the hydraulic buffer 5.

The hanging and pulling force in this control method is provided by hanging equipment.

The above descriptions are only the specific embodiments of the present disclosure, but the scope of protection of the present disclosure is not limited thereto. Any of those skilled in the art may easily think of various equivalent modifications or substitutions within the technical scope of the present disclosure, and these modifications or substitutions should be included in the scope of protection of the present disclosure. Therefore, the scope of protection of the present disclosure should be subject to the scope of protection of the claims.

## Claims

1. A linear actuator with a contact type safety nut, **characterized by** comprising a central screw (1), a driving nut mechanism (2), a safety nut mechanism (3), and a driving control assembly, where the central screw (1) has a screw raceway (11), the safety nut mechanism (3) comprises a safety nut seat (31) sleeved at the periphery of the central screw (1), limit hole channels (32) pointing to the central screw (1) are arranged on the safety nut seat (31), an elastic buffer element (33) is arranged in each of the limit hole channels (32), a safety ball (34) is arranged between the elastic buffer element (33) and the central screw (1), the safety ball (34) partially extends into the screw raceway (11) to be partially positioned in the corresponding limit hole channel (32), the safety ball (34) is capable of rolling along the screw raceway (11) and moving along the corresponding limit hole channel (32), the driving control assembly comprises a motor for driving the central screw to rotate and a motor controller for controlling the motor to operate, the motor controller is capable of directly receiving an external operation state signal and resolving the signal into an action command to control operation of the motor.

2. The linear actuator with a contact type safety nut according to claim 1, wherein thread teeth (35) are provided on an inner wall of the safety nut seat (31), and the thread teeth (35) extend into the screw raceway (11) and are spaced from the central screw (1).

3. The linear actuator with a contact type safety nut according to claim 2, further comprising a height sensor configured to monitor a height of a platform, a weight sensor configured to monitor a weight of the platform, and a current sensor configured to monitor a current of the motor, where a calibrated database of heights, weights, and currents for comparison is stored in the motor controller, the motor controller is capable of obtaining monitored data of the height sensor, the weight sensor, and the current sensor, and determining whether a real-time current exceeds a calibrated current.

4. The linear actuator with a contact type safety nut according to claim 3, wherein a standard current calculation module is provided in the motor controller, and in a self-balancing state, the calculation module is capable of calculating a corresponding standard current according to the height and weight of the current platform, and determining whether the real-time current is lower than the standard current.

5. The linear actuator with a contact type safety nut according to claim 4, wherein the height sensor, the weight sensor, and the current sensor are connected to the motor controller via electrical wires.

6. The linear actuator with a contact type safety nut according to claim 5, wherein the motor controller has a wireless communication conversion module capable of receiving and resolving the external operation state signal.

7. The linear actuator with a contact type safety nut according to claim 6, further comprising a warning light, where the motor controller is capable of controlling the warning light to flicker when determining that the safety nut mechanism takes effect.

8. The linear actuator with a contact type safety nut according to claim 7, further comprising a remote terminal configured to communicate with a cloud server via a network, where the motor controller is capable of sending a fault code to the remote terminal, and the remote terminal is configured to transmit the fault code into the cloud server.

9. The linear actuator with a contact type safety nut according to claim 8, wherein during free descending of the linear actuator, the motor rotates reversely and converts kinetic energy into electric energy.

10. A fault detection method for the linear actuator with a contact type safety nut according to claim 9, comprising the following steps:
S01: directly receiving, by the motor controller, the external operation state signal, and resolving the signal into the action command capable of controlling the motor;
S02: controlling operation of the motor according to the action command obtained by resolving;
S03: when the action command is ascending or descending, operating the motor to cause the linear actuator to execute the action of ascending or descending, meanwhile determining in time, by the motor controller, whether the monitored real-time current exceeds the calibrated current, corresponding to the height and weight of the current platform, in the database, and when the real-time current does not exceed the calibrated current, continuing, by the linear actuator, executing the action of ascending or descending;
S04: when the motor controller determines that the real-time current monitored in real time exceeds the calibrated current, corresponding to the height and weight of the current platform, in the database at a time when the action of ascending or descending is executed, and controlling, by the motor controller, the motor to change the output power such that the linear actuator stops ascending or descending and is kept at the current height;
S05: enabling the linear actuator to enter the self-balancing state, calculating, by the motor controller, the standard current for keeping the self-balancing state according to the height and weight of the current platform, meanwhile determining in real time whether the monitored real-time current is lower than the calculated standard current for keeping the self-balancing state, and when the real-time current is not lower than the standard current, determining that the safety nut does not take effect, and controlling, by the motor controller, the motor to continue executing the initial action command of ascending or descending;
S06: when the real-time current is lower than the standard current in the self-balancing state, determining, by the motor controller, that the safety nut mechanism takes effect;
S07: when the initial action command is ascending, causing, by the motor controller, the linear actuator to stop ascending, and keeping, by the motor, the current state of the linear actuator; when the action command is descending, causing, by the motor controller, the motor to stop operation, and releasing a brake of the motor, such that the linear actuator descends freely and drives the motor to rotate reversely, so as to achieve energy recovery of the motor; and
S08: controlling, by the motor controller, the warning light to flicker and sending the fault code to the remote terminal, transmitting, by the remote terminal, the fault code to the cloud server, and informing, by the cloud server, the after-sales service personnel via the wireless signal.
